# DEMANDE DE BREVET EUROPEEN

(11) **EP 0 893 748 A1**
(43) Date de publication de la demande: **27.01.1999**
(21) Numéro de dépôt: 97204053.9
(22) Date de dépôt: 22.12.1997
(51) Int. Cl.: G05D 23/19, F24F 11/00

(54) **Gestions interactives de bâtiments par détections de présences et par immotique régie à distance**

(30) Priorité: 22.07.1997 BE 9700068
(71) Demandeur: Henriet, Yves Gilbert, 1474 Genappe (BE)
(72) Inventeur: Henriet, Yves Gilbert, 1474 Genappe (BE)

(57) **Abrégé**

La nouvelle gestion intelligente de bâtiments non gardés se caractérise par:
a- une automatisation autonome ET INTERACTIVE en cas d'inoccupation
b- une remise en service A DISTANCE par ligne télécom ou télédistribution etc...
c- une diminution IMPORTANTE des températures d'inoccupation est réalisée
   A- la constatation certaine et en temps réel "et est due aux détecteurs de présences (2) que le bâtiment est vidé de ses occupants" entraînent une série de prise de décisions interactives, autonomes, internes et automatiques: par ex: la coupure de chauffage (6), fermer le circuit d'une friteuse (7) etc...
      Ces décisions AUTONOMES EVITENT LES GASPILLAGES D'ENERGIE
   B- Le choix de l'heure des remises en services A DISTANCE est prise par l'occupant d'après UN CONTEXTE VECU EN TEMPS REEL par téléphone. G.S.M...
      De nouvelles sociétés de services de commandes à distance (immotique et domotique) travaillant avec contrats ou occasionnellement comme "un service réveil", pourraient apporter de nombreux services, les ordinateurs (15) adressent à la cellule de télécom (14) par l'intermédiaire de la ligne télécom (13) à l'heure calculée l'ordre de réactivation du chauffage (6) et d'autres applications, ex éclairage d'une enseigne (10)
   C- LA COMMANDE A DISTANCE permet d'ABAISSER LES TEMPERATURES de sécurité ex: de 17° à 12° et de 17° à 5° pour la température "antigel", tout en réintégrant le bâtiment avec une température de confort ex: 25°.

Ces possibilités permettent des ECONOMIES D'ENERGIE, ET PROVOQUE UNE DIMINUTION SUBSTANTIELLE DE LA POLLUTION.

Il est évident que de nombreuses OPTIONS PEUVENT ETRE RACCORDEES A l'invention, notamment:
- possibilité de placer une alarme téléphonique (17)(18) en cas de PANNE DE CHAUFFAGE, une alarme de réserve de combustible (11) déterminée
- un enregistreur des heures de fonctionnement et d'arrêt (12) dans le but de contrôles privés ou de personnel employé, etc...

## Description

L'invention concerne des applications de gestion intelligente (l'inoccupation réel ) de bâtiments publics, résidentiels, commerciaux, industriels ou mixtes par commandes autonomes, automatiques, internes, ainsi que la remise en fonction à DISTANCE par lignes de télécommunication ou autres, du chauffage et d'une série d'appareils choisis, de services, de besoins et de sécurité, ainsi que la réduction très nettes des températures d'inoccupation.
Un exemple étant la gestion RATIONNELLE du système de chauffage.

Dans les bâtiments non gardés, on trouve divers thermostats d'ambiance intérieure.
- les manuels
- les automatiques sont programmables suivant des paramètres choisis, par exemple les températures de confort 25°, de sécurité 17°, "d'antigel" de 5° à 7 °, les choix des heures diurnes et nocturnes, les jours ouvrables, les week-end etc..
- un système de sonde extérieure de régulation d'énergie.
La majorité sont programmables d'après des PREVISIONS aléatoires:

On comprend facilement que ces systèmes de commandes de chauffage présentent de nombreux défauts et ne sont pas commandés par des CRITERES REELS ET RATIONNELS, ils dépendent également des négligences des occupants:
- l'oubli pour le manuel,
- pour les automatiques, la difficulté de la mise au point et les mauvais réglages,
plusieurs utilisateurs, sans compter les actes de malveillances.
Ils ne tiennent pas comptes de situations particulières; les jours fériés, les week-end prolongés, des grèves etc....
- 2 PAS DE POSSIBILITE DE DONNER DES ORDRES A DISTANCE.
- 3 LES DIFFERENCES DE TEMPERATURES entre la température de confort et celle de sécurité sont généralement faibles avec un rapport de +/- 2/3.

Les techniques actuels entraînent de nombreux inconvénients, le présent brevet y remédie.

Dans un bâtiment public, résidentiel, commercial, industriel on place un ou plusieurs détecteurs de mouvements et de présence (détecteurs infrarouge, par hyperfréquences, mixte ou autres techniques) à des endroits bien précis et stratégiques au niveau du passage.
Les détections sont transmises par fils ou par émetteurs et ondes à notre boîtier de commandes, ce dernier renferme un système de compte à rebours temporisé ou autres techniques, dès que les détecteurs ne perçoivent plus de présence humaine dans le bâtiment, et après un délai choisi par l'occupant, le chauffage se met automatiquement en position de température de sécurité réglable ex :12°, cette automation peut se répercuter sur la coupure ou la mise en service d'autres appareils.

La remise en service du chauffage et des installations choisies peuvent se réaliser de différentes manières:
- 1. manuel
- 2. à heure fixe
- 3 AUTOMATIQUEMENT par réactivation des détections
- 4 commandée à distance manuellement au départ d'un simple téléphone analogique, par G.S.M, par câbles de télédistribution bidirectionnels ou autres technologies.

- 4. Pour les bâtiments, qui exigent une multitudes d'applications ou qui manquent d'un responsable permanent, exemples: les bâtiments publics, les responsables itinérants, une société proposant de nouveaux services en immotique offre des commandes calculées d'applications à distance.
   Dans l'exemple du chauffage, ces sociétés reçoivent plusieurs fois par jour des informations de météo régionales et en fonction de la qualité d'isolation et d'observations de chaque bâtiment déterminé, l'ordinateur détermine avec exactitude l'heure de la mise en fonction du chauffage et via les lignes télécom transmet l'ordre au boîtier de commandes, d'autres applications peuvent être commandées lors de cette transmission.
   Ces ordinateurs tiennent compte des situations particulières, un long week-end, jours fériés, fêtes locales, grèves, etc...

Il est évident que dans le cadre de la remise en service à distance, en plaçant une série de relais normalement ouverts, fermés, alternatifs, temporises ou non, ou autres technologies, une multitude d'applications dont la domotique sont réalisables pour tons bâtiments, du domicile à l'industrie.

Quelques exemples:
- le chauffage, le conditionnement d'air
- éclairage de parking ou d'entrées
- chauffage indépendant d'une piscine
- mise en service d'un lave vaisselle ou d'une machine à lessiver
- mise en service d'un bain de décapage dans l'industrie
- possibilités d'alterner l'éclairage de différentes pièces d'un bâtiment afin de leurrer d'éventuels visiteurs non désirés, et toutes applications en DOMOTIQUE fermeture des tentures etc...

_on peut donc constater que cinq grandes idées dont trois maîtresses se dégagent:
- une série de prescriptions automatiques et sectionnés suivant un critère, réel, incontestable, rationnel : LE BATIMENT EST INOCCUPE.
- une série de commandements volontaires et sélectionnes à distance soit manuellement par téléphone, G.S.M. ou par un ordinateur calculant divers services.
- un abaissement IMPORTANT des températures "d'inoccupations" est REALISEE

Les avantages obtenus grâce à cette invention consistent notamment:

### ELLE INTERDIT DES GASPILLAGES INUTILES

- rentabilité maximale assurée par une coupure automatique du chauffage et des appareils sélectionnes lorsque le bâtiment est vidé de ses occupants, CRITERE INCONTESTABLE
- réglages très simples et fiables, finit les oublis, les sabotages et les chipotages.
   - DES ECONOMIES IMPORTANTES D'ENERGIE du fait que la mise en température de sécurité est immédiate lorsque le bâtiment est vide et que la température de sécurité peut être abaissée sensiblement (de 17° à 5°) dû à la remise en fonction à distance et de rentrer avec la température de confort ex 25°.
   - pour le chauffage s'adapte à tous types d'énergies, de combustibles et de système AVEC UNE DIMINUTION NOTABLE DE LA POLLUTION
- plusieurs possibilités complémentaires de remise en fonction ou stopper des appareils choisis et NOTAMMENT A DISTANCE par simple ligne télécom ou autres, soit manuellement ou automatiquement par les services d'une société en immotique.

- par la multiplication de relais différents, temporisès ou non , on arrive à une ORGANISATION COMPLETE du bâtiment en services, besoins ou sécurité.

- une alarme téléphonique de PANNE DE CHAUFFAGE peut être adjointe
- une alarme de réserve de combustible peut être annexée
- un enregistrement des heures de modifications peut être annexé dans le but de contrôles privés ou de personnel employé.

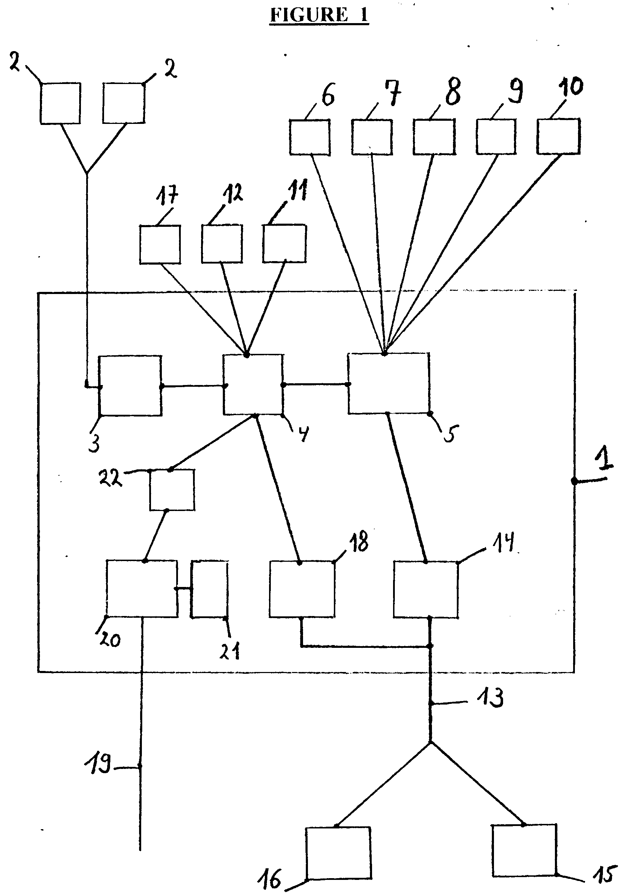

La figure 1 (sans échelle) représente l'ensemble de l'invention:
- la partie supérieure représente des informations internes et quelques exemples de gestion du bâtiment
- la partie centrale spécifie l'invention: le boîtier de commandes
- la partie inférieure représente différents moyens de donner des injonctions à distance.

On installe dans un bâtiment la partie maîtresse de l'invention, le boîtier de commandes 1. qui reçoit des information d'un ou plusieurs détecteurs de présence 2. placés à des endroits stratégiques au niveau du passage, dont la technique de fonctionnement est de l'hyperfréquences ou de l'infrarouge ou mixtes (système antivol) ou autres techniques.

Après vérifications des législations nationales, dans certains pays l'invention pourrait se raccorder et se servir des détections d'un système antivol déjà installé

Pendant l'occupation du bâtiment, les détections de présence alimentent un système de compte à rebours 3 ou d'autres techniques réglables en durée, celle-ci est choisie par les occupants. Dès que la dernière personne a quitté le bâtiment, le compte à rebours 3 décompte sa temporisation choisie jusqu'à la fin, ce qui déclenche la mise sous tension et l'activité de la cellule interactive 4 cette dernière procède à une série d'injonctions choisies par l'occupant dans la centrale de relais 5 et notamment placer la position de sécurité de température sur tous types existants de thermostats de chauffage, de chaudières ou tous types de chauffage 6.

D'IMPORTANTS GASPILLAGES D'ENERGIE sont bannis pour deux raisons:
- le critère réel d'inoccupation est constaté en temps réel
- plus de réglages, d'oublis, de chipotages, et sabotages de toutes natures, ainsi que la programmation des thermostats étant TRES ALEATOIRES.

D'IMPORTANTES ECONOMIES D'ENERGIE sont réalisées par:
- une différence entre les températures de confort et de sécurité plus importante dû à la possibilité de remise en fonction à distance par l'occupant à L'HEURE DE SON CHOIX, actuellement un rapport de +/-66% (25°/17°), avec l'invention un rapport de: +/-50 %(25°/12°) pour celle de sécurité, et de +/- 20%(17°/5°) pour celle appelée "antigel" on constate un abaissement de la température de cinq ou de douze degrés en permanence dans ces exemples.

### UNE DIMINUTION SUBSTANTIELLE DE LA POLLUTION.

- Une alarme TELEPHONIQUE 17 de panne de chauffage en option
- Une alarme automatique de réserve de combustible 11 peut être annexée.
- Un enregistrement des heures d'occupation 12 peut être annexé pour des contrôles

La cellule interactive 4 adresse dans la centrale de relais 5 des ordres à une série de relais 7 8 9 10 etc.. de différents types a savoir: normalement ouvert, normalement fermé, à bascule, alternatif, multifonctions, horaire, temporisé etc....
Ces derniers sont illimités et dépendent de l'importance du bâtiment et de la sophistication de l'installation, ils peuvent donc ouvrir et/ou fermer avec ou sans délais des circuits sélectionnés par l'occupant comme:
- en sécurité, fermer un circuit d'une friteuse et d'un percolateur 7, s'assurer de la mise sous tension du système d'alarme etc...

La remise en service de différents appareils peut se réaliser de différents moyens:- --
- manuellement, à heure fixe, automatiquement par reprise de détections..
- A DISTANCE de façon manuel, au départ d'un simple téléphone, d'un G.S.M, d'un mobilophone 16 , etc. en formant le ou un des numéros d'appel du bâtiment en passant par lignes télécom, de télédistribution, par ondes par tous moyens et supports de transmission de signaux 13 qui arrivent dans la cellule de télécommunication 14, qui après avoir vérifiés l'exactitude du code d'accès composé de deux, trois chiffres ou plus, accepte l'ordre ou les ordres transmis à distance.

Un exemple d'applications, un représentant habitant seul dans un bâtiment où il faut trente minutes pour passer de la température de sécurité 12° à celle de confort 25°. Il n'a jamais d'heure fixe pour rentrer, lorsqu'il estime être à +/- trente minutes de son domicile, avec son G.S.M. 16, il appelle le boîtier de commandes 1 sur sa ligne télécom 13 en introduisant son code secret dans la cellule de télécom 14, il réactive par l'intermédiaire de la centrale de relais 5 son chauffage 6 ainsi que par divers relais 7, 8, etc.. il sélectionne une série d'injonctions, ex: l'éclairage de l'entrée du garage 8, etc...

Pour les bâtiments plus importants et professionnels, comme les bâtiments non gardés, les publics, les commerces, les P.M.E. les industries.
De nouvelles sociétés de commandes à distances (immotique industriel) pourraient proposés de NOUVEAUX SERVICES.
Elles utilisent un ou des ordinateurs 15 équipés de cartes télécom et modems reliés à des lignes de télécom publiques ou privées.
Pour le chauffage, les ordinateurs 15 peuvent calculer avec exactitude le temps de réchauffe nécessaire pour atteindre la température de confort, en fonction des températures locales extérieures transmises par un service météo public ou privé.

L'ordinateur 15 adressent à la cellule de télécom 14 par l'intermédiaire de la ligne télécom 13 à l'heure calculée l'ordre de réactivation du chauffage 6.
En plus du calcul exact les ordinateurs tiennent compte des week-end prolongés, jours fériés, fêtes locales, grèves etc...

Par la centrale de relais 5 et par les différents relais 7, 8, 9, etc... une série d'injonctions peuvent être exécutés par différents appareils:
- caméra de surveillance
- éclairages de parking et d'entrées de bâtiments
- éclairages d'enseignes publicitaires 10
- réchauffe d'un bain de décapage de soude caustique 9 etc...

La cellule télécom 14 peut admettre plusieurs sous codes complémentaires, une deuxième possibilité étant de placer plusieurs cellules de télécom 14 en parallèle afin de permettre des applications:
- uniques, précises et spéciales
- fortement décalées dans le temps

Un bâtiment industriel a plusieurs besoins en immotique industriel:
le travail commence à 7h30, l'enseigne publicitaire 10, le chauffage d'un bain de décapage de soude caustique 9 et le chauffage 6 sont mis en service à 6h30.
Après un week-end de deux jours l'enseigne 10 et le chauffage 6 seront toujours mis en service à 6h30, tandis que le bain de décapage 9 devra l'être à: ex 05h.

Après un pont férié de quatre jours, le bain de décapage 9 devra être chauffé à : ex 03h30 pour être à température à 7h30.
Ceci prouve l'intérêt d'un calcul précis par l'ordinateur 15 et d'admettre des sous codes ou autres techniques à la cellule de télécom 14 qui pourra dans le cas du réchauffement du bain de soude caustique effectué une opération ponctuelle.

Pour une école qui ferme pendant deux semaines à Noël un oubli de placer le thermostat en position de sécurité ou un acte de malveillance sont exclus par l'invention, le chauffage 6 se met automatiquement en position de sécurité suivant le seul critère réel et RATIONNEL: LE BATIMENT EST INOCCUPE !.. L'invention bannit les GASPILLAGE et incite les ECONOMIES D'ENERGIE, avec une diminution notable de la POLLUTION.

### DES OPTIONS SONT POSSIBLES NOTAMMENT :

- possibilité de placer une alarme téléphonique en cas de PANNE DE CHAUFFAGE ou d'actes de malveillance; une exemple de réalisation, il suffit de placer un thermomètre digital 17 réglé à deux degrés inférieure à la température de sécurité du thermostat 5, ex 12° pour le thermostat 5 et 10° enregistré sur le thermomètre 17 une alarme déclenche le compositeur téléphonique 18 doté d'un message vocal ou autres de détresse qui via la ligne 13 de télécom appelle un centre accessible 24/24h.

Une alarme de réserve de combustible déterminée
1- en plaçant une dispositif dans la cuve ou dans la réservoir
2- en plaçant un compteur d'heures 11 doté d'une limitation et d'une alarme relié à la cellule 4 qui comptabilise les heures de chauffe, dès que la limite est atteinte, une alarme visuelle ou sonore se déclenche.

- Un enregistreur 12 des heures de fonctionnement et d'arrêt (à bande et/ou digital) est relié à la cellule interactive 4 dans le but de contrôles privés ou du personnel employé etc...

### IL EST EVIDENT QUE DE NOMBREUSES OPTIONS PEUVENT ETRE RACCORDEES A L INVENTION.

Le boîtier de commandes 1 comprend également un comprend également une arrivée de courant de secteur 19 vert le transformateur 20, qui alimente en tension de sécurité l'ensemble, ainsi qu'une batterie de sécurité 21 afin de sauvegarder les réglages et les ordres réceptionnés, des fusibles 22 protègent le tout.

Le boîtier de commandes 1 est fermé par une serrure de sécurité et la porte équipée d'une série de témoin lumineux, ainsi que d'interrupteurs afin de procéder à des commandes manuelles et tous autres éléments estimés nécessaires pour une fabrication industrielle.

## Revendications

1. A. L'invention concerne de multiples applications de gestion intelligentes de tous bâtiments non gardés suivant deux critères:
- le premier est incontestable, réel et rationnel: LE BATIMENT EST INOCCUPE
- le second est la remise en service à distance par ligne télécom ex le chauffage dont les programmations de thermostats sont difficiles et basées sur des prévisions très aléatoires.
Pendant l'occupation du bâtiment, des détecteurs de présence(2) alimentent un système de compte à rebours (3) placé dans le boîtier de commandes (1) .
Dés que la dernière personne a quitté le bâtiment, le compte à rebours (3) décompte sa temporisation choisie jusqu'à sa fin, ce qui déclenche la mise sous tension et l'activité de la cellule interactive(4) cette dernière procède à une série d'injonctions choisies par l'occupant dans la centrale de relais (5) et notamment placer la position de sécurité de température dans tous les types de thermostats de chauffage existants(6). la cellule interactive(4) adresse dans la centrale de relais (5) des ordres à une série de relais(7)(8)(9) (10) etc.. de différents types a savoir: normalement ouvert, normalement fermé, à bascule, alternatif, multifonctions, horaire,temporisé, ils peuvent donc ouvrir et/ou fermer avec ou sans délais des circuits sélectionnés par l'occupant comme fermer un circuit d'une friteuse et d'un percolateur (7), s'assurer de la mise sous tension du système d'alarme etc...
L'inoccupation EST CONSTATEE EN TEMPS REEL ainsi que la prise de décisions INTERACTIVES et autonomes évitent des GASPILLAGES SUBSTANTIELS
B. la remise en service par l'occupant A DISTANCE TE A L HEURE DE SON CHOIX de façon manuelle, au départ d'un simple téléphone ou G.S.M.(16) le boîtier de commandes (1) est appelé sur sa ligne télécom (13) en introduisant son code secret dans la cellule de télécom (14), on réactive par l'intermédiaire de la centrale de relais (5) son chauffage (6) ainsi que par divers relais (7),(8), etc.. on sélectionne une série d'injonctions, ex: l'éclairage de l'entrée du garage (8), etc...
Pour les bâtiments plus importants et professionnels, comme les bâtiments publics, les commerces, les P.M.E. les industries non gardées en permanence.
De nouvelles sociétés de commandes à distances (immotique industriel) pourraient proposés une multitude de NOUVEAUX SERVICES.
Les ordinateurs (15) adressent à la cellule de télécom (14) par l'intermédiaire de la ligne télécom (13) à l'heure calculée l'ordre de réactivation du chauffage (6) ainsi que par exemple: le réchauffage d'un bain de décapage de soude caustique (9) etc...
En plus du calcul exact les ordinateurs tiennent compte des week-end prolongés, jours fériés, fêtes locales, grèves etc...
Par ces remises en fonction à distance, on REALISE D'IMPORTANTES ECONOMIES D ENERGIE pour deux raisons:
- l'occupant CHOISIS L'HEURE des remises en services d'après UN CONTEXTE VECU EN TEMPS REEL.
- les températures de sécurité sont abaissées, actuellement un rapport de +/-66% exemple (25°/17°), avec l'invention des rapports de +/-50% ex (25°/12°)pour une absence d'une journée, et +/-20% (25°/5°) pour plusieurs jours d'absence; on constate un abaissement de la température de sécurité de cinq degrés ou DE DOUZE DEGRES dans ces exemples, tout en obtenant par un simple appel téléphonique, une température de confort lors de sa rentrée
La nouvelle gestion intelligente de bâtiments non gardés se caractérise par :
a- une automatisation autonome et interactive en cas d'inoccupation
b- une remise en service A DISTANCE par ligne télécom ou télédistribution etc..
c- une diminution IMPORTANTE des températures d'inoccupation est réalisée
A- la constatation certaine et en temps réel "et est due aux détecteurs de présences (2) que le bâtiment est vidé de ses occupants" entraînent une série de prise de décisions interactives autonomes, internes et automatiques: par ex: la coupure de chauffage (6), fermer le circuit d'une friteuse (7) etc...
Ces décisions INTERACTIVES EVITENT LES GASPILLAGES D'ENERGIE
B- Le choix de l'heure des remises en services A DISTANCE est prise par l'occupant d'après UN CONTEXTE VECU EN TEMPS REEL par téléphone, G.S.M...
De nouvelles sociétés de services de commandes à distance (immotique et domotique) travaillant avec contrats ou occasionnellement comme "un service réveil", pourraient apporter de nombreux services, les ordinateurs (15) adressent à la cellule de télécom (14) par l'intermédiaire de la ligne télécom (13) à l'heure calculée l'ordre de réactivation du chauffage (6) et d'autres applications, ex éclairage d'une enseigne(10)
C- LA COMMANDE A DISTANCE permet d'ABAISSER LES TEMPERATURES de sécurité ex: de 17° à 12° et de 17° à 5° pour la température "antigel", tout en réintégrant le bâtiment avec une température de confort ex: 25°.
Ces possibilités permettent des ECONOMIES D'ENERGIE, ET PROVOQUE UNE DIMINUTION SUBSTANTIELLE DE LA POLLUTION.
Il est évident que de nombreuses OPTIONS PEUVENT ETRE RACCORDEES A l'invention, notamment:
- possibilité de placer une alarme téléphonique (17)(18) en cas de PANNE DE CHAUFFAGE, une alarme de réserve de combustible (11) déterminée
- un enregistreur des heures de fonctionnement et d'arrêt (12) dans le but de contrôles privés ou de personnel employé, etc...

2. La gestion intelligent de bâtiments suivant la revendication une, revendique l'ensemble des ordres à distance et des options qui pourraient être apportées.

3. La gestion intelligente de bâtiment suivant les revendications une et deux pour lequel une mise en service et l'exploitation de nouveaux centres de commandes à distances traitant de la gestion industrielle, de l'immotique et/ou de la domotique sont revendiquées par l'invention.
